(19) **Europäisches Patentamt**
**European Patent Office**
**Office européen des brevets**

(11) **EP 1 920 489 B1**

(12) **EUROPEAN PATENT SPECIFICATION**

(45) Date of publication and mention
of the grant of the patent:
**21.01.2009 Bulletin 2009/04**

(51) Int Cl.:
**H01M 8/06** (2006.01) **C01B 3/24** (2006.01)

(21) Application number: **06789251.3**

(86) International application number:
**PCT/US2006/030194**

(22) Date of filing: **03.08.2006**

(87) International publication number:
**WO 2007/019208 (15.02.2007 Gazette 2007/07)**

(54) **REFORMER AND FUEL CELL SYSTEM CONTROL AND METHOD OF OPERATION**

REFORMER UND BRENNSTOFFZELLENSYSTEMSTEUERUNG UND BETRIEBSVERFAHREN

REFORMEUR ET COMMANDE ET METHODE DE FONCTIONNEMENT D'UNE PILE A COMBUSTIBLE

(84) Designated Contracting States:
**AT BE BG CH CY CZ DE DK EE ES FI FR GB GR HU IE IS IT LI LT LU LV MC NL PL PT RO SE SI SK TR**

(30) Priority: **03.08.2005 US 705234 P**

(43) Date of publication of application:
**14.05.2008 Bulletin 2008/20**

(73) Proprietor: **Genesis Fueltech, Inc.**
**Spokane, WA 99212 (US)**

(72) Inventor: **DEVRIES, Peter, David**
**Spokane, WA 99203 (US)**

(74) Representative: **Walder, Jeremy Thomas**
**Sanderson & Co.,**
**34, East Stockwell Street**
**Colchester,**
**Essex CO1 1ST (GB)**

(56) References cited:
**WO-A-01/26174        JP-A- 11 345 625**
**US-A1- 2004 080 297**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

This invention relates to control systems for fuel cells and hydrogen-producing fuel processors, and methods for operating the control system. Specifically, the invention describes the operation of a hydrogen-producing reformer coupled to a fuel cell, where the operation of the reformer and fuel cell is such that a hydrogen feed pressure to the fuel cell is maintained above a minimum desired point, voltages within the fuel cell are maintained above a desired point, and where the reformer is maintained at a temperature such that a minimum hydrogen output pressure may be maintained during transient operation from low to high output.

BACKGROUND OF THE INVENTION

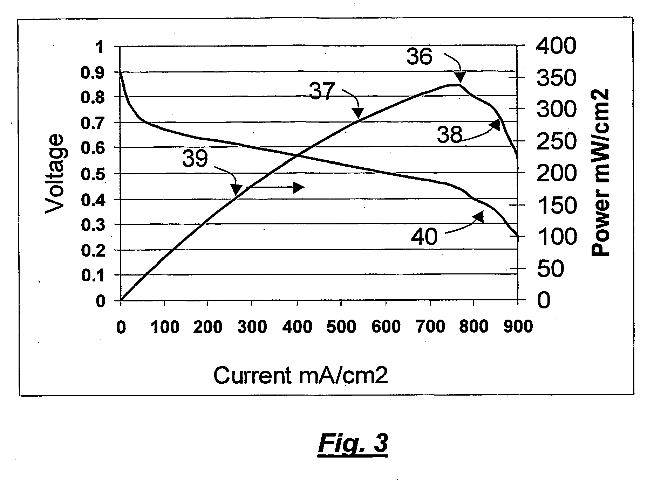

Hydrogen-powered fuel cells offer tremendous promise for providing electrical power in a variety of existing and new applications. For continuous operation, these fuel cell systems are optimally coupled to a hydrogen producing reformer, utilizing a hydrogen-containing feedstock such as alcohol, natural gas, or other hydrocarbon.
In order to operate a reformer in combination with a fuel cell to produce electrical power, the two devices must be coupled so that the reformer produces the amount of hydrogen needed by the fuel cell. Excess hydrogen output of the reformer is typically sent to the reformer burner or burners, unless some sort of hydrogen storage is available to receive the excess hydrogen. The excess hydrogen which is burned in the reformer cannot be utilized by the device; this may eventually cause excessive temperatures in the reformer. Conversely, if the reformer produces too little hydrogen for the fuel cell to meet the desired electrical load, the fuel cell will "starve" for hydrogen and will not operate properly. As a result, the integration between the fuel cell and the reformer requires careful coordination of the requirements for both the reformer and fuel cell together, to enhance the performance of the integrated system. This is particularly important as the "ramp rate", or the ability of the reformer to increase from a low to a high load, can take several minutes to transition from minimum output to the maximum.
One of the common methods of controlling the fuel cell and reformer is to employ the use of mass flow transducers to measure the hydrogen flow, and compare this with the fuel cell current which is directly proportional to the hydrogen consumption. Another method is to use a well calibrated pump, which provides a known fuel flow for a given pumping setpoint. Unfortunately, if the mass flow transducer falls out of calibration, or the pumps vary, or some other difficulty arises, the control system may not operate properly. Furthermore, if the reformer is the partial oxidation or autothermal type, additional controls will be required to maintain the hydrogen purity and dewpoint of the delivered gas to the fuel cell. These controls can be very complex and difficult, with a large number of control points needed for proper operation. It is also very difficult to manage the operation of the reformer during transients from low output to high output, and ramp rates of minutes to hours are widely known in the art.
The use of digital controllers to regulate reformer and fuel cell systems is generally disclosed in the prior art. For example, the PC25 C On-Site Fuel Cell Power Plant Service Manual (ONSI Corporation, April 1996) describes a controller for operating a reformer and fuel cell system which includes multiple operating states, various measurement points and controls, which include restricting the power output of the system if an abnormal condition occurs, and maintaining certain temperatures within the reformer. A warmup burner with igniter for the reformer is also disclosed in the control system.
Examples of the PC25 C in operation include a description of several systems running in parallel on a common output bus (1 MW Fuel Cell Power Plant Final Report, Reporting Period: March 2000 to March 2001, April 2001, DE-FG26-99FT40548, Chugach Electric Association).
In US 6,3 83,670 B1 (2002) Edlund et. al claim a digital controller for managing a fuel processor, including multiple operating states, and various measurement points and controls. This further includes a description of a controller maintaining operating parameters such as hydrogen pressure or temperatures within the reformer. The control system is not linked, however, to the regulation of a fuel cell.
In US 6,495,277 B1 Edlund et. al claim a fuel cell system with a reformer, fuel cell stack, and battery bank where the power rate of the fuel cell stack is regulated based upon variables such as the production rate of the reformer, the currently available power production rate of the fuel cell, and the battery state of charge. The control system is configured to restrict a fuel cell stack from having greater than its rated power output drawn therefrom.
There are several difficulties associated with this control system. First, a hydrogen flow transducer is required in order to determine the production rate of the reformer. Second, controlling the system to prevent the fuel cell from exceeding its maximum rated or available power is irrelevant. The fuel cell will have a power curve which has two possible points on either side of the maximum available power point (Fig. 3). When at the maximum available power point, reducing the available power can be achieved by either *increasing* the current, or decreasing it. The reduction of the power therefore does not always provide a definitive means for protecting the fuel cell from excessive current or from low cell voltages. US 6,495,277 B1 Edlund et. al therefore does not disclose a means for definitively controlling the fuel cell such that an excessive current or a low cell voltage condition may be prevented.

In US 2003/0049502 A1 Edlund et. al disclose a thermal recovery system for a reformer coupled to a fuel cell stack. As part of the claims, a controller is configured to control the rate at which fluid is delivered to the fuel processing system responsive to the rate of operation of the fuel cell stack. The rate of operation of the stack can determine the hydrogen consumption, and therefore the required hydrogen output of the reformer. However, the state of the reformer can vary, and a given pumping rate may not always supply the hydrogen as is supposed, which will result in low input hydrogen pressure to the fuel cell stack; in this case a higher pumping rate than assumed by Edlund et. al may be called for.

In US 2001/0049038 A1 Dickman and Edlund claim a fuel cell system comprised of at least one reformer coupled to at least one fuel cell, where there can be more than one reformer or fuel cells coupled in parallel on a common output bus. General means for regulating the current produced by the fuel cell stack assembly are disclosed, but without reference to being responsive to the hydrogen pressure, or the operating voltages of the cells of the stack. A controller is also claimed which regulates the operational state of the plurality of the fuel cell stacks responsive to the flow rate of the hydrogen.

Finally, in US 2004/0080297 A1 Laboe discloses a method of decoupling the fuel cell controls from the reformer by utilizing pressure as a feedback parameter for controlling the reformer. For transient operation an accumulator is introduced between the reformer and the fuel cell to provide a supply of hydrogen for transient operation and to smooth the control of the system, particularly during fuel cell purges. Laboe notes that an imbalance in the hydrogen production and (fuel cell) consumption will cause the reformer to overheat, and that output pressure of the hydrogen in excess of what the fuel cell needs should be controlled by reducing the hydrogen production rate. This, however, neglects the temperature control within the reformer, which will periodically require the hydrogen production to exceed the fuel cell consumption, so that the reformer may be heated to a desired level and maintained. The requirement that hydrogen consumption and production be matched, as asserted by Laboe, therefore does not address the periodic imbalance needed to maintain the reformer at given minimum required temperatures. Further, the excessive hydrogen pressure which is encountered during the imbalance period, to maintain temperature, is not addressed by Laboe; thus the fuel cell as described in 2004080297 A1 may receive hydrogen pressures which may damage the fuel cell. A differentiation must therefore be made with the use of a hydrogen pressure regulator, which will have an upstream pressure, and a regulated downstream pressure.

With respect to the control of a DC-DC converter connected to the reformer, Laboe discloses a method of increasing or decreasing the fuel cell current by controlling the fuel cell output to be a function of the hydrogen set point pressure. The DC converter thus increases hydrogen consumption in an effort to bring the output hydrogen pressure to the set point when the pressure is high, and decreases consumption when it is low. Maintenance of a narrow pressure range to the fuel cell with this technique is thus envisioned. However, this method does not allow for excess hydrogen production of the reformer, required when the internal temperatures of the reformer fall below a set value, and an increased hydrogen production rate is required to heat the reformer. Furthermore, the reduction of the current described by Laboe is tied only to the hydrogen pressure, which neglects the possibility of poorly performing cells in a fuel cell stack. In such an instance, the current must be reduced to protect the cells, rather than match the hydrogen consumption.

In light of these difficulties, a reformer delivering high purity hydrogen, which is easily controlled and integrated into a fuel cell system, is needed for improving the reliability and operability of fuel cell systems, particularly where the reformer is maintained at a temperature sufficient to handle transient operation. Further, an integrated system is needed where the fuel cell may be definitively protected from adverse operation under all conditions, and where the reformer is able to supply rapid output changes without the requirement of a large accumulator for hydrogen between the reformer and fuel cell.

SUMMARY OF THE INVENTION

Reformers for delivering high purity hydrogen to fuel cells typically utilize a purification stage for separating the hydrogen from the other reformed gases. Two examples include a pressure-swing adsorption (PSA) stage, and a hydrogen permeable membrane, such as a palladium alloy. Such a device, referred to as a purification reformer, will create a relatively pure hydrogen stream for consumption by the fuel cell. Particularly for the membrane purification reformer, the hydrogen flow through the membrane is governed by the following relationship, which is a combination of Fick's first law and Sievert's law:

$$\text{Membrane flux} = \text{Area} * (P/t) * [(P_{high})^{\wedge}.5 - (P_{low})^{\wedge}.5]$$

**EP 1 920 489 B1**

Where P is the permeability, *t* is the thickness of the membrane, and $P_{high}$ represents the hydrogen partial pressure on the high pressure side of the membrane (in absolute pressure), and $P_{low}$ represents the absolute pressure on the low pressure permeate (purified hydrogen) side of the membrane. The available hydrogen pressure on the permeate side of the membrane is therefore a function of the membrane flux and hydrogen partial pressure on the high pressure side, as well as the variables associated with the permeability P.

During operation a fuel processor with a membrane will supply reformed gases to the high pressure side, and hydrogen will be delivered to the low pressure side of the membrane. The pressure on the low side of the membrane will depend on the flow of the hydrogen, which in turn, depends on the rate of the reformed gases arriving at the high side of the membrane. For a given hydrogen output rate, the output pressure of the hydrogen can be increased by turning up the pumping rate of the feedstock for the reformed gases arriving at the high side of the membrane. However, the output pressure of the membrane will generally vary too widely for use with a typical fuel cell; at low hydrogen output, the hydrogen pressure will generally exceed the safety limits of the fuel cell membrane, while at high output levels, the pressure may drop below recommended limits. For example, fuel cells will generally require a minimum hydrogen pressure to operate properly. Most typically this falls in the 1-5 psig range for ambient pressure operation of the fuel cell cathode. 1 psig corresponds to 6890 Pa overpressure added to the standard pressure of 1 bar of $10^5$ Pa. When the delivered hydrogen pressure falls below an accepted range, the fuel cell may eventually fail. Therefore, it is imperative that the reformer maintain a minimum hydrogen pressure to the fuel cell. A first control loop for a controller controlling a fuel cell must therefore increase the feedstock pump rate to maintain a minimum hydrogen pressure to the fuel cell. To prevent the hydrogen pressure from becoming too high, a pressure regulator is inserted between the reformer and the fuel cell.

The use of hydrogen pressure to determine the feedstock pumping rate into the reformer has several advantages. Periodic fuel cell purges will require additional hydrogen, which can be difficult to directly measure during the purge. The fuel cell will also require increasing amounts of hydrogen for a given power output over the life of the stack; assumptions about the amount of hydrogen needed for a given power output are invalid, since the hydrogen consumption is related to only the current, and not the power of the stack. Even by measuring the current and calculating the hydrogen consumption, however, it cannot be known whether the reformer is keeping up unless the hydrogen pressure is measured. The hydrogen pressure therefore is the best means of controlling the pumping rate of the reformer, with respect to supplying the fuel cell with the needed hydrogen.

Additionally, the reformer must maintain a minimum temperature within the device (particularly at the catalyst) to effectively perform reforming of the feedstock for a given output level. This minimum temperature depends on the flow rate; at low flow rates, a lower temperature will be sufficient to perform the reforming. At higher output rates, a higher temperature will be needed for the increased requirement in catalytic activity.

In the event the reformer must handle sudden transitions from low output rates to higher output rates, the catalyst bed must be maintained at a temperature above that needed for lower output rates. This will heat the catalyst to a temperature where it can immediately perform the reforming at the higher output rate when a sudden increase in pumping rate is encountered. This allows for a rapid response of the reformer to load changes without having to change temperatures. In this manner, a reformer can respond to load changes in seconds, rather than minutes (the time it takes to increase the internal temperatures within the device). Therefore, a second control loop of the controller is needed to maintain the temperatures within the reformer at a sufficient temperature to handle the anticipated changes in load. This temperature will depend on the catalyst type, the fuel being reformed, the expected rate of change of production, and the various heat transfer characteristics of the reformer itself. Further, the minimum temperature should be sufficient to prevent embrittlement of Pd-based membranes (if used). For example, a temperature of over 280°C is desired when Pd-Ag membranes are used; embrittlement of the metal may occur at lower temperatures.

Finally, the third aspect of the present integrated reformer - fuel cell system is the use of a feedback loop to maintain proper operation of the stack, and to definitively protect it from improper operating conditions. The first improper operating condition involves the fuel cell consumption exceeding the reformer hydrogen production, with a resulting hydrogen pressure below the acceptable limits for the fuel cell. While the reformer will respond by increasing production, the fuel cell current must be reduced until the hydrogen pressure is at least at the minimum requirement. The second improper operating condition is the manifestation of at least one cell, or a group of cells, with a lower output voltage than is recommended. This can occur when excess water gets in the cell or gas passageway, or when a cell becomes dehydrated, for example. This low voltage situation can usually be rectified by decreasing the current until the appropriate voltage level may be maintained. The reduction of the current responsive to fuel cell voltages (instead of power), as well as the hydrogen pressure, can therefore protect the fuel cell from damage in most cases.

The improved control method thus involves four control loops; a first loop responsive to maintaining an output hydrogen pressure from the reformer above a set level, and a second loop responsive to maintaining a minimum temperature which dictates the activity of at least one catalyst bed and/or a purification membrane, a third loop to reduce the fuel cell current in order to maintain a minimum hydrogen pressure to the fuel cell, and a final loop to reduce the fuel cell current as necessary to maintain minimum voltages within the fuel cell.

4

Reduction of the fuel cell current is easily achieved when a DC-DC converter is used to modify the voltage of the fuel cell output power. For example in a boost DC-DC converter the voltage boost ratio is related to the duty cycle D which defines when the converter switch is closed (i.e., the transistor is turned on) of a pulse-width modulated (PWM) signal:

$$\text{Boost ratio} = 1 / (1-D)$$

=

In a fuel cell with an output of 12 volts DC fed into a boost converter, which in turn is connected on the output side to a 24 VDC battery, the boost ratio would be 2.33 to hold the battery at a float voltage of 28 volts, which would correspond to a PWM duty cycle of $D$=0.57. The current output of the fuel cell is directly related to the PWM duty cycle. In this case, the fuel cell current can be reduced by decreasing the PWM duty cycle. In the event where the fuel cell output is less than the external load, the battery will take up the balance of the load. The method of reducing the current to protect the fuel cell is therefore applicable as long as the batteries do not discharge beyond a set limit; beyond this point, the system will require a reduction in load.

A benefit of the control system and methodology described herein is the simple integration of a fuel cell system with the purification reformer. The control of the reformer as described does not require any external input or flow transducer measurements; the sensing of the output hydrogen pressure and the internal temperatures of the reformer provide the needed information. Adjustment of the DC-DC converter to lower the current output of the fuel cell can be done with a DC-DC converter controller that receives hydrogen pressure and fuel cell voltage information. Alternatively, a system controller can control both the reformer and the DC-DC converter. In all cases, the control of the reformer at a sufficient minimum temperature is adequate to allow for transients and surge loading, rather than the use of a hydrogen accumulator.

Furthermore, the control means as described eliminate the need to always turn off the fuel cell during purge cycles of a dead-ended anode. Since the pressure of the hydrogen upstream of the regulator may be sufficiently high during a purge cycle, it may not be necessary to turn the fuel cell off or reduce the current of the fuel cell during a purge. The reduction in the load due only to hydrogen pressure or low voltage concerns (ie., only when needed) is a thus a much better method of protecting the fuel cell as a loss of power during a purge cycle is not always necessary.

Finally the system and methods described allow for rapid transients in output, such as a nearly instant transient from 0% to 100% of the rated output in less than one second, without the need for a large accumulator.

BRIEF DESCRIPTION OF THE DRAWINGS

In the drawings:

Fig. 1 is a schematic illustration of a typical fuel cell system embodiment in accordance with the present invention containing a reformer, fuel cell, DC-DC converter, battery, and DC-AC inverter.

Fig. 2a is a schematic illustration of a DC-DC converter with a controller input for fuel cell current reduction.

Fig. 2b is a schematic illustration of a DC-DC converter with a cutout feature for fuel cell current reduction.

Fig. 3 is a graph showing the current (I) and voltage (V) curves and peak power characteristics for a typical fuel cell.

Fig. 4 is a graph illustrating burner temperature, raffinate temperature, and hydrogen output pressure obtaining during Experiment 3 described herein.

DETAILED DESCRIPTION OF THE INVENTION

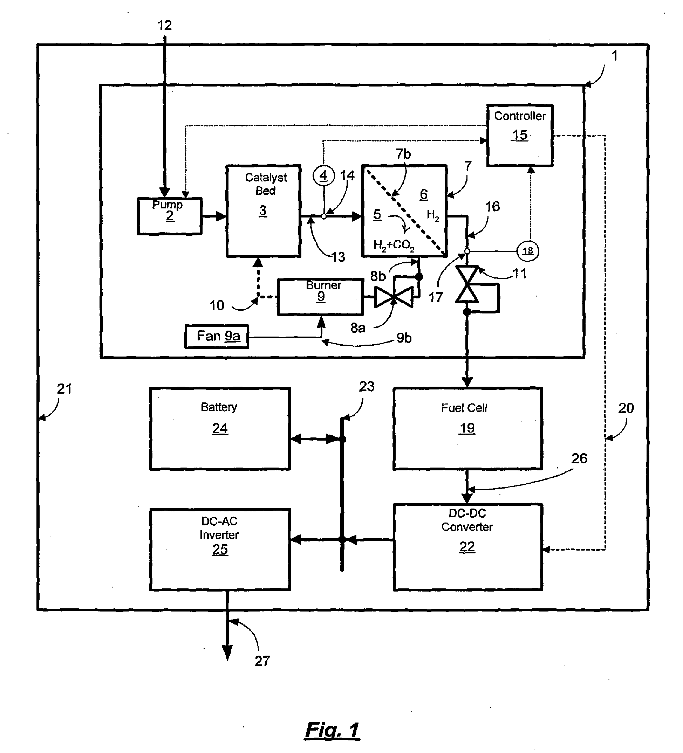

A typical fuel cell system is shown in Fig. 1, and is enclosed in enclosure 21. The fuel mixture intake 12 allows pump 2 to draw in feedstock for the reformer 1, and pressurize it for injection into catalyst bed 3. The pump 2 can be a single pump for premixed fuels such as methanol/water or ethanol/water, but can also consist of several pumps for non-miscible feeds, such as propane, diesel, etc. Between pump 2 and catalyst bed 3 there can also be various heat exchangers, boilers, etc., which are not detailed for the purpose of brevity. The fuel and water arrive at the catalyst bed 3 and are ideally converted into carbon dioxide, hydrogen, leftover water vapor, and any unreacted fuel or product from other reactions, such as carbon monoxide. The pumping rate of the pump 2 is controlled by controller 15.

After conversion of the fuel in catalyst bed 3, the gases travel through connection 13 to membrane housing 7, moving past temperature sensor 14. Temperature sensor 14 is converted into a signal via transducer 4 for interpretation by the controller 15. Transducer 14 may alternatively be located at the controller 15. Other temperature sensors and transducers may be positioned at various locations in the reformer for the purpose of either monitoring or control. The sensor 14 may be a resistive element, a thermocouple, or other device effective for monitoring the temperature. Additional sensors, such as flow rates, pressures, and so forth, may also be included.

Reformed gases 5 arrive in membrane housing 7. Membrane 7b, located in housing 7, is positioned to selectively remove the hydrogen from reformed gases 5, passing the hydrogen through membrane 7b to permeated hydrogen 6. The relative position of the temperature sensor 14, membrane 7b, and catalyst bed 3 are shown for illustrative purposes only. Alternative arrangements include, for example, a catalyst bed 3 proximal to the separation membrane 7b, so that the removal of the hydrogen facilitates the chemical reaction in catalyst bed 3. Various arrangements of the physical parts are described by and known to those skilled in the art, and can also include PSA separation of the hydrogen from the reformed gases.

After the removal of hydrogen through membrane 7b, the depleted reformed gases, which are now referred to as raffinate, are depressurized through a backpressure regulator 8a or similar device, and are sent via line 8b to a flame or catalytic burner generally represented as 9. The raffinate may be cooled prior to entering regulator 8a if desired. The heat from burner 9 is supplied to the various parts of the reformer requiring it and is generally shown as 10. Unreformed fuel, hydrogen, and side products such as carbon monoxide will travel to the burner 9 and supply heat 10. Burner fan 9a supplies burner air 9b to burner 9.

Hydrogen purified from module 7 will travel through exit line 16. If desired, the hydrogen may be cooled prior to entering pressure regulator 11. The pressure regulator prevents the hydrogen output pressure from exceeding the desired pressure of the fuel cell 19. Prior to entering regulator 11 the hydrogen travels past hydrogen pressure sensor 17 which is connected to a hydrogen pressure transducer 18. Hydrogen pressure transducer 18 sends a reading of the hydrogen pressure to controller 15. Hydrogen pressure upstream of regulator 11 may be controlled to ensure that a minimum pressure, downstream of regulator 11, may be maintained. A small pressure drop through regulator 11 at higher output levels may be accounted for in the control algorithm to ensure a minimum pressure level of the hydrogen to fuel cell 19 is maintained.

Controller 15 will operate pump 2 responsive to temperature transducer 4 and hydrogen pressure transducer 18, in order to maintain the hydrogen pressure heading to the fuel cell 19 through regulator above an acceptable minimum pressure.

Fuel cell 19 will receive the regulated hydrogen produced by reformer 1. The product will be DC electricity, shown exiting the fuel cell through electrical interconnection 26. The power may then flow, in the preferred embodiment, to a DC-DC converter 22. The DC-DC converter will then condition the voltage of the fuel cell to make it compatible for a storage device. This is generally illustrated as battery 24, connected to a common output bus 23. DC-AC inverter 25 draws power from output bus 23. The battery may be charged from the fuel cell when the load connected to the AC terminal 27 is lighter than the capacity of the fuel cell 19 and reformer 1. Conversely, when the load at AC terminal is higher than the capacity of the fuel cell and reformer, battery 24 can be used to supply the needed energy as long as there is sufficient charge.

In the event that the hydrogen supply pressure (prior to regulator 11) for fuel cell 19 drops below an acceptable minimum pressure, the consumption of hydrogen by fuel cell 19 must be reduced. This may be accomplished by sending a consumption reduction signal 20 to DC-DC converter 22, reducing the amount of current sent to bus 23, and in turn lowering the hydrogen consumption. Information, such as the current output of the fuel cell 19 is not required for this reduction signal; if the pressure is too low, the load must be reduced regardless of the current.

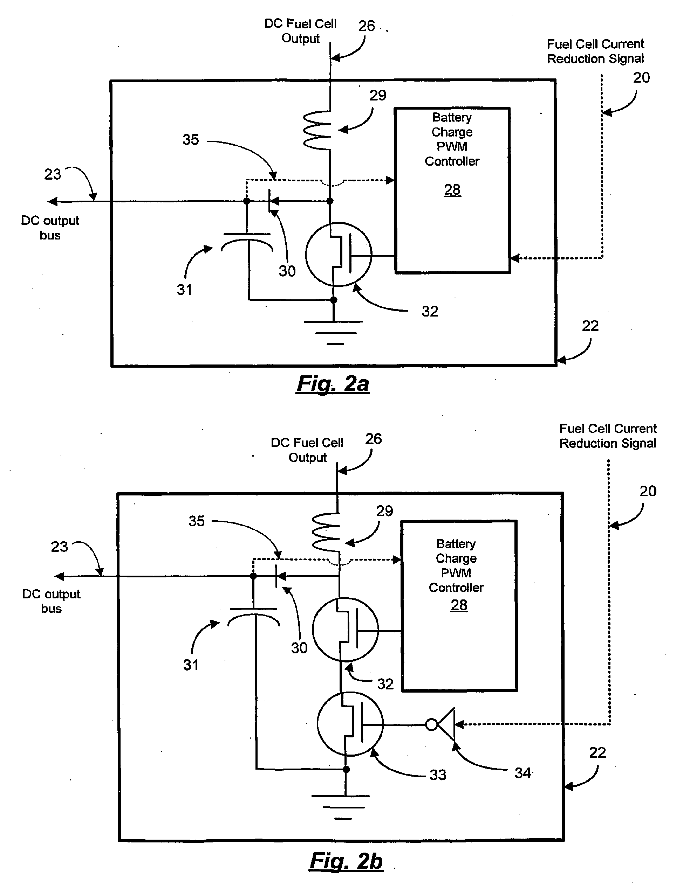

The reduction signal 20 and the DC-DC converter 22 are more clearly illustrated in Figures 2a and 2b, where a boost converter is shown for illustrative purposes. In Figure 2a, a battery charge PWM controller circuit is generally shown as 28. Such circuits are commonly known to those skilled in the art and often include a dedicated controller integrated circuit chip. Battery charge controller 28 operates by sensing the bus voltage via sensing line 35, and varying the PWM duty cycle D at the gate of transistor 32. The inductor 29, diode 30, and capacitor 31 form the remaining elements of the typical boost DC-DC converter. The controller 28 may also include a sensing input of the charging current in the battery 24, although this is not shown. The battery charge controller circuit 28 includes means for receiving fuel cell current reduction signal 20, and reducing the PWM duty cycle D output to the gate of transistor 32. The signal 20 may be a variable analog signal to allow a proportional reduction in the duty cycle D, or it can be a digital signal which may be responded to.

In Figure 2b a simple arrangement for lowering the fuel cell hydrogen consumption at the DC-DC converter 22 is illustrated. In this circuit the fuel cell current reduction signal 20 (asserted high) passes through digital inverter 34, and controls the operation of transistor gate 33. When the reduction signal 20 is asserted high, the transistor 33 will turn off, preventing the DC-DC converter from operating. This will result in zero current at the fuel cell power output 26, minimizing the hydrogen consumption of the fuel cell 19. The DC-DC converter will start operating once the hydrogen pressure to fuel cell 19 is restored to a minimum acceptable level, and the fuel cell will resume power-producing operation.

Reduction in the current of fuel cell 19 may also be required when the voltage of individual cells, or groups of cells, falls below a predetermined value. In this case the reduction signal will again be sent to the DC-DC converter, until the low-voltage condition is rectified. The fuel cell current reduction signal may therefore be responsive to both the hydrogen pressure minimum point, as well as the voltages associated with the fuel cell stack.

Various DC-DC converters are well-known, including both buck and boost. The means of utilizing a reduction of output power via current reduction signal 20 is not limited to the type of converter or the means of controlling the DC-DC converter. Nor is a DC-DC converter even required; in the minimum embodiment, the fuel cell current can be limited with a simple solid state relay or switch controlled by reduction signal 20. Furthermore, while a battery 24 is preferred, other storage means may be employed such as with ultracapacitors. The utilization of a DC-AC inverter may not be required for certain applications and may be omitted from fuel cell system 21.

Finally, the controller illustrated as 15 within the reformer may be placed generally within the fuel cell system 21, as a global controller. In such an embodiment the controller will control the functions of other system components besides the reformer, such as the fuel cell or the DC-DC converter.

Figure 3 illustrates current (I), voltage (V) and power curves for a typical fuel cell. Fuel cell I-V curve 40 shows the lowering voltage of the fuel cell as the current increases. Fuel cell power curve 39 shows the relationship of the fuel cell power to the current. Peak power point 36 of curve 39 shows the maximum available power from the fuel cell. Reduction in the peak power of the fuel cell to a specific amount shown at 37, by reducing the current, can also be replicated at the same power output at 38, by increasing the current. The reduction of the fuel cell power therefore does not necessarily achieve a reduction of current, and cannot be used as a definitive means of protecting the fuel cell.

At no point in the control method as described is it necessary to know the fuel cell current; all that are required are fuel cell voltages, hydrogen pressure values, and temperatures within the reformer for the integrated control system.

Experiment 1

A Genesis Fueltech model GT-8 hydrogen purification reformer was used to supply hydrogen to an Avista Labs (Spokane, WA) SR-12 fuel cell. The reformer as tested was capable of supplying over 6 standard liters of hydrogen per minute. The reformer control system utilized an industrial programmable ladder logic controller coupled to a hydrogen output pressure transducer, thermocouples for measuring the temperature exiting the catalyst bed and palladium-alloy membrane, and an AC solenoid pump for injecting pressurized methanol/water mix into the reformer. The pump was controlled by periodically turning it on for short periods to charge the reformer with a pulse of methanol/water. The proprietary reforming catalyst required a temperature of approximately 360-425°C for high conversion of the methanol and water into hydrogen and carbon dioxide. The minimum hydrogen output pressure setpoint was 3 psig, with an upper limit controlled by a pressure regulator. The maximum on-time percentage of the pump was 25% at 3 psig. At higher pressures the on-time of the pump was reduced to a rate as low as 1%. The pumping rate was set so that the internal temperature of the reformer declined over time, such that the pumping rate had to be increased once a minimum internal temperature was reached.

Specifically, to prevent the catalyst temperature from dropping below 380°C, the ladder logic controller was programmed to increase the pumping rate as the catalyst bed temperature declined towards 380°C. The pumping rate was allowed to reach up to 10% when the output pressure was high, as long as the catalyst temperature was decreasing towards 380°C. The pumping rate was limited to about 1% if the flue gas in the reformer exceeded 425°C, in order to prevent overheating.

The GT-8 reformer was allowed to warm up prior to activating the fuel cell. The internal temperature of the catalyst was maintained at approximately 400°C prior to activating the fuel cell. The fuel cell was started from the output of the reformer, and the fuel cell output was fed to an Exeltech XP-600 DC-AC inverter to directly convert the fuel cell output to an AC variable load.

The AC load was varied from 0-262 watts. With each change in load, the reformer automatically compensated to the new hydrogen consumption rate by adjusting the pump rate of the methanol/water mix into the reformer. The reformer also compensated for changes in pressure associated with the periodic bleed of the SR-12 fuel cell. The output pressure varied from 3 to 10 psig, depending on the AC load, and the hydrogen consumption was 4.9 standard liters per minute at the maximum AC load.

Experiment 2

A Genesis Fueltech GT-8, as described above, was connected to an Hcore-500 fuel cell (H-Power, Inc.). The output of the fuel cell was tested with an adjustable load bank. Once the reformer was warmed up, the fuel cell was brought on-line, using the hydrogen produced by the reformer. In the minimal load condition, the catalyst temperature was maintained at a minimum of about 360-380°C by increasing the pump rate to prevent cooling below this temperature.

Once the fuel cell was ready, the load was changed from 0 to 400 watts with a unit step increase. The hydrogen pressure momentarily dropped below 3 psig, but was restored within approximately 3 seconds as the reformer controller increased the pump rate for the methanol/water feedstock. The reformer was able to maintain the 400 watt consumption rate in the steady state, since the catalyst bed was kept above the minimum temperature needed for high production. The calculated hydrogen consumption at the 400 watt level was approximately 4.6 standard liters per minute (5 lm).

Experiment 3

A Genesis Fueltech model 20L reformer, rated at an output of 20 standard liters per minute of hydrogen at a minimum output pressure of 5 psig, was configured with an output pressure regulator and flow meter for transient testing. In this particular case, referring to Fig. 1, the output pressure regulator 11 was physically external to reformer enclosure 1, with the hydrogen vented to ambient rather than traveling to a fuel cell. Pressure sensing 18 for control of the reformer was internal to reformer enclosure 1, sensing the pressure on pressure regulator input line 16. The external pressure regulator (Marshall Gas Controls, Inc., model 350) was set to an output pressure of 5 psig, and the flow meter (Advanced Specialty Gas Equipment, model VFM7965B-3B) was set for a flow of 20.5 slm of hydrogen. The output flow rate was verified with water displacement testing.

The reformer was set with zero hydrogen output flow and allowed to stabilize. The controller maintained a raffinate exit temperature exiting the purifier (downstream of the catalyst bed, indicated as 8b in Fig. 1) at about a temperature of 367 Celsius. The actual temperature of the purifier and catalyst bed are slightly higher than indicated at the low-flow rates, as the thermocouple is attached to the raffinate tube where heat shedding losses exist. The temperature of the burner outlet 10, Fig. 1 was also monitored during the test.

Once the reformer was stable, a data point was taken and the hydrogen line was then connected to the regulator and flow meter so that a flow of 20.5 slm hydrogen was nearly instantly established. In this case the requested rate of hydrogen output (20.5 slm) was met by making sure the output regulator input pressure was high enough to maintain a 5 psig output to the flowmeter. The feedstock pump responded to the increased demand in less than one second, such that the output pressure did not drop below 5 psig. During this one second, the hydrogen in the lines and passages of the purifier module (at 50 psig) supplied the hydrogen, the required volume being slightly more than 100cm$^3$. A small volume of this type is normally seen in the passageways of the purifier and hydrogen lines; the requirement of an accumulator was thus not required.

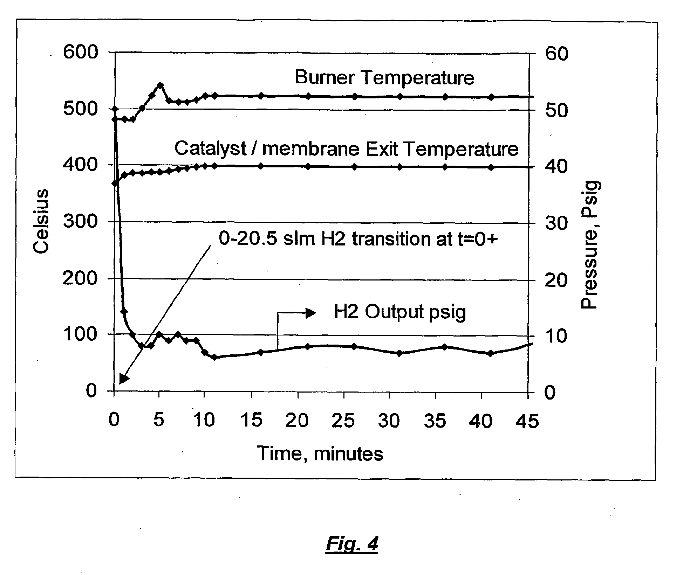

The burner temperature, raffinate temperature, and the hydrogen output pressure (upstream of the regulator) were then measured over the course of 45 minutes. These data are shown in Fig. 4.

After a 0-20.5 slm hydrogen output transient, and as the output pressure dropped, the reformer sensed the decrease in pressure and responded by increasing the pump rate, such that the output pressure of over 5 psig was maintained over the course of the test. However, since the catalyst bed at 0 slm output was maintained at a temperature above that needed for the 20 slm output level, there was sufficient thermal energy in the system to allow the nearly instantaneous transition from 0 to 20.5 slm of hydrogen, which is slightly above the rated output of the reformer. The reformer was thus able to transition from 0-100% of its output without the normally required time-lag needed for heating up the internal components (such as the catalyst bed), observed in the prior art.

## Claims

1. A fuel cell power system comprising:

   - a reformer producing purified hydrogen from fuel, said hydrogen exiting said reformer at an output pressure;
   - a regulator for regulating the output pressure of the produced hydrogen;
   - a fuel cell utilizing the produced hydrogen to generate electricity;
   - means for monitoring the output pressure of the purified hydrogen upstream of the pressure regulator;
   - means for monitoring at least one temperature within the reformer;
   - means for introducing said fuel into the reformer at a fuel introduction rate;
   - means for controlling electrical output current from the fuel cell; and
   - at least one controller for controlling at least the fuel introduction rate into the reformer, where the introduction rate of said fuel is responsive to maintain at least one temperature within said reformer above a minimum level, as well as to maintain the output pressure of the delivered purified hydrogen above a set pressure, and where the electrical output current from the fuel cell is reduced responsive to the output pressure of the purified hydrogen in order to maintain a minimum hydrogen pressure to the fuel cell.

2. A fuel cell power system as claimed in claim 1, where the minimum hydrogen pressure delivered to the fuel cell is at least 1,0069 bar [0.1 psig].

3. A fuel cell power system as claimed in claim 1, where the reformer includes a catalyst bed and a purifier membrane, and where the at least one minimum temperature within the reformer is at least one of 250°C at the catalyst bed, or 280°C at the purifier membrane.

4. A fuel cell power system as claimed in claim 1, where the fuel cell has measured voltages of cells or groups of cells, and the output current of the fuel cell is further reduced responsive to said measured voltages within the fuel cell, to maintain minimum voltage levels, wherein the minimum fuel cell voltage level for a single cell is greater than 0.2 volts, and for a group of fuel cells averages at least 0.4 volts per cell.

5. A fuel cell power system as claimed in claim 1, where the at least one minimum temperature within the reformer is sufficient to sustain the output of the reformer at greater than 50% of its maximum output capacity in a steady state.

6. A fuel cell power system as claimed in claim 5, where the at least one minimum temperature within the reformer is of the fuel prior to, at, or downstream of the catalyst bed, at a temperature of 300°C or greater.

7. A fuel cell power system as claimed in claim 1 where the fuel delivery means comprises a solenoid pump.

8. A fuel cell power system as claimed in claim 1, where the means for controlling the output current of the fuel cell comprises a DC-DC converter with a controller, and further includes an energy storage device at an output of the DC-DC converter, such that load demands exceeding the output of the fuel cell can be met temporarily by the energy storage device, and where the DC-DC converter controller is responsive to maintain a minimum hydrogen pressure to the fuel cell by reducing the fuel cell current when needed, and optionally further includes a DC-AC inverter to convert the DC fuel cell output power to AC output power.

9. A fuel cell power system as claimed in claim 1, where the reformer includes:

- at least one catalyst bed containing a catalyst in thermal communication with an least one burner for producing reformed gases containing hydrogen;
- means for measuring the temperature of at least one of the catalyst or catalyst bed, gases exiting or downstream of the catalyst bed, or gases exiting or downstream of the burner; and
- said controller is further responsive to the measured temperature and configured to control the delivery of the fuel such that the burner maintains the catalyst bed at a temperature sufficient to support transient operation of the reformer from a starting hydrogen output level of less than 20% of a maximum rated hydrogen output, preferably less than 10% of the maximum rated hydrogen output, to a requested hydrogen output rate which is over 75% of the maximum rated hydrogen output, preferably over 90% of the maximum rated hydrogen output, where the requested hydrogen output rate is supplied over the duration of a transient period during which the requested hydrogen output rate increases.

10. A fuel cell power system as claimed in claim 9, where the reformer further includes:

- means for separating hydrogen from the gases produced at the catalyst bed,
- means for measuring the pressure of the hydrogen exiting the hydrogen separation means; and
- said controller is further responsive to the measured temperature and the measured hydrogen pressure, and the controller is further configured to maintain a fuel delivery rate sufficient to maintain the pressure of the hydrogen exiting the hydrogen separation means above a minimum hydrogen output pressure during the transient period, and where the minimum hydrogen output pressure is greater than 1,0345 bar [0.5 psig] and preferably is greater than 1,0689 bar [1.0 psig].

**Patentansprüche**

1. Brennstoffzellen-Energiesystem, welches aufweist:

- einen Reformer, der aufbereiteten Wasserstoff aus einem Brennstoff produziert, wobei der Wasserstoff den Reformer mit einem Ausgangsdruck verlässt;
- einen Regulator zum Regulieren des Ausgangsdruckes des produzierten Wasserstoffes;
- eine Brennstoffzelle, die den produzierten Wasserstoff verwendet, um Elektrizität zu erzeugen;
- Mittel zum Überwachen des Ausgangsdruckes des aufbereiteten Wasserstoffes stromaufwärts vom Druckregulator;
- Mittel zum Überwachen mindestens einer Temperatur innerhalb des Reformers;
- Mittel zum Einleiten des Brennstoffes in den Reformer mit einer Brennstoff-Einleitrate;
- Mittel zum Steuern des elektrischen Ausgangsstromes von der Brennstoffzelle; und
- mindestens einer Steuerung zum Steuern mindestens der Brennstoff-Einleitrate in den Reformer, wobei die Einleitrate des Brennstoffes zum Halten mindestens einer Temperatur innerhalb des Reformers über einem Mindestniveau, sowie zum Halten des Ausgangsdruckes des abgegebenen aufbereiteten Wasserstoffs über einem Solldruck rückgekoppelt ist, und wobei der elektrische Ausgangsstrom der Brennstoffzelle abhängig vom Ausgangsdruck des aufbereiteten Wasserstoffs vermindert wird, um einen Mindestwasserstoffdruck zu der Brennstoffzelle aufrechtzuerhalten.

2. Brennstoffzellen-Energiesystem nach Anspruch 1, wobei der an die Brennstoffzelle abgegebene Mindestwasserstoffdruck mindestens 1,0069 bar [0.1 psig] beträgt.

3. Brennstoffzellen-Energiesystem nach Anspruch 1, wobei der Reformer ein Katalysatorbett und eine Aufbereitungsmembran beinhaltet, und wobei die mindestens eine Mindesttemperatur innerhalb des Reformers mindestens eine von 250°C bei dem Katalysatorbett oder 280°C bei der Aufbereitungsmembran ist.

4. Brennstoffzellen-Energiesystem nach Anspruch 1, wobei die Brennstoffzelle gemessene Spannungen von Zellen oder Gruppen von Zellen hat, und der Ausgangsstrom der Brennstoffzelle ferner abhängig von den gemessenen Spannungen innerhalb der Brennstoffzelle vermindert wird, um Mindestspannungsniveaus aufrechtzuerhalten, wobei das Mindest-Brennstoffzellen-Spannungsniveau für eine einzelne Zelle größer als 0.2 Volt ist, und für eine Gruppe von Brennstoffzellen im Durchschnitt mindestens 0.4 Volt pro Zelle ist.

5. Brennstoffzellen-Energiesystem nach Anspruch 1, wobei die mindestens eine Mindesttemperatur innerhalb des Reformers ausreichend ist, um die Ausgabe des Reformers bei mehr als 50 % seiner maximalen Ausgabe-Kapazität in einem stabilen Zustand aufrechtzuerhalten.

6. Brennstoffzellen-Energiesystem nach Anspruch 5, wobei die mindestens eine Mindesttemperatur innerhalb des Reformers die des Brennstoffes vor dem, bei dem, oder stromabwärts vom Katalysatorbett bei einer Temperatur von 300°C oder größer ist.

7. Brennstoffzellen-Energiesystem nach Anspruch 1, wobei das Brennstoffabgabemittel eine Magnetpumpe aufweist.

8. Brennstoffzellen-Energiesystem nach Anspruch 1, wobei das Mittel zum Steuern des Ausgangsstroms der Brennstoffzelle einen DC-DC Konverter mit einer Steuerung aufweist, und weiter eine Energiespeichervorrichtung bei einem Ausgang des DC-DC Konverters beinhaltet, so dass eine Lastanforderung, die die Ausgabe der Brennstoffzelle übersteigt, temporär durch die Energiespeichervorrichtung abgedeckt werden kann, und wobei die DC-DC Konverter-Steuerung zum Halten eines Mindestwasserstoffdruckes zu der Brennstoffzelle, sofern nötig, über eine Reduktion des Brennstoffzellenstromes rückgekoppelt ist, und optional weiter einen DC-AC Inverter beinhaltet, um die DC Brennstoffzellen-Abgabeenergie in AC Abgabeenergie zu konvertieren.

9. Brennstoffzellen-Energiesystem nach Anspruch 1, wobei der Reformer beinhaltet:

- mindestens ein Katalysatorbett, das einen Katalysator in thermischer Kommunikation mit mindestens einem Brenner zum Herstellen von Wasserstoff enthaltenden Spaltgasen enthält;
- Mittel zum Messen der Temperatur mindestens des Katalysators oder des Katalysatorbetts, der vom Katalysatorbett austretenden Gase oder der Gase stromabwärts vom Katalysatorbett, oder der vom Brenner austretenden Gase oder der Gase stromabwärts vom Brenner; und
- die Steuerung erfolgt ferner abhängig von der gemessenen Temperatur und ist konfiguriert, um die Abgabe des Brennstoffes derart zu kontrollieren, dass der Brenner das Katalysatorbett bei einer hinreichenden Temperatur hält, um den Übergangsbetrieb des Reformers von einem Start-Wasserstoff-Abgabeniveau von weniger als 20 % von einer maximalen Nenn-Wasserstoffabgabe, vorzugsweise weniger als 10 % von der maximalen Nenn-Wasserstoffabgabe, zu einer angeforderten Wasserstoffabgaberate zu unterstützen, welche über 75 % von der maximalen Nenn-Wasserstoffabgabe liegt, vorzugsweise über 90 % von der maximalen Nenn-Wasserstoffabgabe, wobei die angeforderte Wasserstoffabgaberate über die Zeitdauer einer Übergangsdauer, während derer die angeforderte Wasserstoffabgaberate ansteigt, bereitgestellt wird.

10. Brennstoffzellen-Energiesystem nach Anspruch 9, wobei der Reformer weiter beinhaltet:

- Mittel zum Separieren des Wasserstoffes von den Gasen, die bei dem Katalysatorbett produziert werden,
- Mittel zum Messen des Druckes des aus dem Wasserstoffseparationsmittel tretenden Wasserstoffes; und
- die Steuerung erfolgt ferner abhängig von der gemessenen Temperatur und dem gemessenen Wasserstoffdruck, und die Steuerung ist weiter konfiguriert, um eine hinreichende Brennstoffabgaberate aufrechtzuerhalten, um den Druck des aus dem Wasserstoffseparationsmittel tretenden Wasserstoffes über einem Mindestwasserstoffausgangsdruck während der Übergangsdauer zu halten, wobei der Mindestwasserstoffausgangsdruck größer als 1,0345 bar [0.5 psig] und vorzugsweise größer als 1,0689 bar [1.0 psig] ist.

**Revendications**

1. Système d'alimentation à pile à combustible comprenant :

   - un reformeur produisant de l'hydrogène purifié à partir de combustible, ledit hydrogène quittant ledit reformeur à une pression de sortie ;
   - un régulateur pour réguler la pression de sortie de l'hydrogène produit ;
   - une pile à combustible utilisant l'hydrogène produit pour générer de l'électricité;
   - des moyens de surveillance de la pression de sortie de l'hydrogène purifié en amont du régulateur de pression ;
   - des moyens de surveillance d'au moins une température à l'intérieur du reformeur ;
   - des moyens d'introduction dudit combustible dans le reformeur à un débit d'introduction de combustible ;
   - des moyens de commande du courant électrique de sortie sortant de la pile à combustible ; et
   - au moins une commande pour commander au moins le débit d'introduction de combustible dans le reformeur, où le débit d'introduction dudit combustible répond pour maintenir au moins une température à l'intérieur dudit reformeur au-dessus d'un niveau minimum, ainsi que pour maintenir la pression de sortie de l'hydrogène purifié délivré au-dessus d'une pression donnée, et où le courant électrique de sortie sortant de la pile à combustible est réduit en réponse à la pression de sortie de l'hydrogène purifié afin de maintenir une pression d'hydrogène minimale à la pile à combustible.

2. Système d'alimentation à pile à combustible selon la revendication 1, dans lequel la pression d'hydrogène minimale délivrée à la pile à combustible est d'au moins 1,0069 bar (0,1 psig).

3. Système d'alimentation à pile à combustible selon la revendication 1, dans lequel le reformeur inclut un lit catalytique et une membrane purificatrice, et dans lequel l'au moins une température minimale à l'intérieur du reformeur est l'une au moins des suivantes : 250°C dans le lit catalytique, ou 280°C dans la membrane purificatrice.

4. Système d'alimentation à pile à combustible selon la revendication 1, dans lequel la pile à combustible a des tension mesurées de piles ou de groupes de piles, et le courant de sortie de la pile à combustible est en outre réduit en réponse auxdites tensions mesurées à l'intérieur de la pile à combustible, afin de maintenir des niveaux de tension minimum, le niveau de tension minimum de la pile à combustible étant supérieur à 0,2 volt pour une cellule simple, et valant en moyenne au moins 0,4 volt par pile pour un groupe de piles à combustible.

5. Système d'alimentation à pile à combustible selon la revendication 1, dans lequel l'au moins une température minimale à l'intérieur du reformeur est suffisante pour alimenter la sortie du reformeur à plus de 50% de sa capacité de sortie maximale à l'état stable.

6. Système d'alimentation à pile à combustible selon la revendication 5, dans lequel l'au moins une température minimale à l'intérieur du reformeur est une température du combustible avant, sur, ou en aval du lit catalytique, à une température de 300°C ou plus.

7. Système d'alimentation à pile à combustible selon la revendication 1, dans lequel les moyens pour délivrer du combustible comprennent une pompe à solénoïde.

8. Système d'alimentation à pile à combustible selon la revendication 1, dans lequel les moyens de commande du courant de sortie de la pile à combustible comprennent un convertisseur continu-continu contenant une commande, et comprennent en outre un dispositif de stockage d'énergie à une sortie du convertisseur continu-continu, de telle sorte que des demandes de charge excédant la sortie de la pile à combustible peuvent être satisfaites temporairement par le dispositif de stockage d'énergie, et système d'alimentation dans lequel la commande du convertisseur continu-continu répond pour maintenir une pression minimale d'hydrogène à la pile à combustible en réduisant le courant de la pile à combustible lorsque c'est nécessaire, et inclut facultativement un inverseur continu-alternatif pour convertir la puissance de sortie continue de la pile à combustible en puissance de sortie alternative.

9. Système d'alimentation à pile à combustible selon la revendication 1, dans lequel le reformeur comprend :

- au moins un lit catalytique contenant un catalyseur, en communication thermique avec au moins un brûleur, pour produire des gaz reformés contenant de l'hydrogène ;

- des moyens pour mesurer la température d'au moins un parmi le catalyseur ou le lit catalytique, des gaz sortants ou en aval du lit catalytique, ou des gaz sortants ou en aval du brûleur ; et

- ladite commande est en outre sensible à la température mesurée, et elle est configurée pour commander l'approvisionnement du combustible de telle façon que le brûleur maintienne le lit catalytique à une température suffisante pour supporter le régime transitoire du reformeur depuis un niveau de sortie d'hydrogène de départ de moins de 20% d'une sortie d'hydrogène nominale maximale, de préférence moins de 10% de la sortie d'hydrogène nominale maximale, jusqu'à un taux de sortie d'hydrogène requis qui est supérieur à 75% de la sortie d'hydrogène nominale maximale, de préférence supérieur à 90% de la sortie d'hydrogène nominale maximale, où le taux de sortie d'hydrogène exigé est fourni pendant la durée d'une période transitoire durant laquelle le taux de sortie d'hydrogène requis augmente.

**10.** Système d'alimentation à pile à combustible selon la revendication 9, dans lequel le reformeur comprend en outre :

- des moyens pour séparer l'hydrogène des gaz produits dans le lit catalytique,

- des moyens pour mesurer la pression de l'hydrogène quittant les moyens de séparation de l'hydrogène ; et

- ladite commande est en outre sensible à la température mesurée et à la pression d'hydrogène mesurée, et la commande est en outre configurée pour maintenir un débit d'approvisionnement en combustible suffisant pour maintenir la pression de l'hydrogène quittant les moyens de séparation de l'hydrogène au-dessus d'une pression de sortie d'hydrogène minimale durant la période transitoire, et où la pression de sortie d'hydrogène minimale est supérieure à 1,0345 bar (0,5 psig) et de préférence supérieure à 1,0689 bar (1,0 psig).

_**Fig. 1**_

*Fig. 2a*

*Fig. 2b*

**Fig. 3**

_Fig. 4_

**EP 1 920 489 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6383670 B1, Edlund
- US 6495277 B1
- US 20030049502 A1
- US 20010049038 A1
- US 20040080297 A1